(19) Europäisches Patentamt / European Patent Office / Office européen des brevets

(11) **EP 2 768 104 A1**

(12) **DEMANDE DE BREVET EUROPEEN**

(43) Date de publication:
**20.08.2014 Bulletin 2014/34**

(51) Int Cl.:
*H02J 3/26* (2006.01)   *H02M 7/5387* (2007.01)

(21) Numéro de dépôt: **13155388.5**

(22) Date de dépôt: **15.02.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Alstom Technology Ltd**
**5400 Baden (CH)**

(72) Inventeur: **De Preville, Guillaume**
**78990 ELANCOURT (FR)**

(74) Mandataire: **Ilgart, Jean-Christophe**
**BREVALEX**
**95, rue d'Amsterdam**
**75378 Paris Cedex 8 (FR)**

(54) **Commande d'un convertisseur de tension triphasé en mode déséquilibré**

(57) Procédé de commande en courant d'un convertisseur de tension triphasé fonctionnant en mode déséquilibré en courant, caractérisé en ce qu'il comporte les étapes de :
- détermination (E1) d'une valeur limite de consigne de courant direct (Idlim*) en fonction d'une capacité en courant du convertisseur (Ilim) et d'un courant équilibré direct (Id*),
- détermination (E2) d'une valeur maximale de courant inverse (Iimax) en fonction de la valeur limite de consigne de courant direct (Idlim*) déterminée et telle que les courants de phase soient maximaux,
- détermination (E3) d'une valeur limite de consigne de courant inverse (Iilim*) en fonction de la valeur maximale de courant inverse (Iimax) et d'un courant équilibré inverse (Ii*).

FIG. 3

EP 2 768 104 A1

**Description**

**DOMAINE TECHNIQUE**

La présente invention concerne de manière générale les convertisseurs triphasés de tension. Elle concerne plus particulièrement la commande des convertisseurs triphasés de tension fonctionnant en mode déséquilibré en courant.

Des équipements concernés sont par exemple une alimentation triphasée avec charge déséquilibrée, une connexion côtière haute tension HVSC (d'après l'anglais High Voltage Shore Connection).

**ÉTAT DE LA TECHNIQUE ANTÉRIEURE**

Les convertisseurs de tension, dits VSC (d'après l'anglais Voltage Source Converter) à circuit intermédiaire de tension sont commandés de sorte que le courant soit limité.

La limitation de courant est classiquement faite dans un cercle limite déterminé par la capacité en courant du convertisseur et défini dans un plan complexe.

Or l'inventeur a constaté que la limitation du courant au cercle limite n'est pas optimale lorsque le convertisseur fonctionne en mode déséquilibré.

En effet, dans ce cas, les courants de phase du convertisseur n'atteignent pas leurs limites respectives. Cela conduit à ne pas pouvoir profiter de la pleine capacité de l'équipement. L'inventeur a constaté expérimentalement que la perte de performance peut atteindre 8 à 10 % selon l'état du déséquilibre. La perte est mesurée par l'écart entre la capacité de courant par phase et le courant crête obtenu lors de la limitation.

A performance constante, il faudrait sur-dimensionner l'équipement pour compenser cette perte de performance.

**EXPOSÉ DE L'INVENTION**

L'invention vise à résoudre les problèmes de la technique antérieure en fournissant un procédé de commande en courant d'un convertisseur de tension triphasé fonctionnant en mode déséquilibré en courant, **caractérisé en ce qu'il** comporte les étapes de :

- détermination d'une valeur limite de consigne de courant direct en fonction d'une capacité en courant du convertisseur et d'un courant équilibré direct,
- détermination d'une valeur maximale de courant inverse en fonction de la valeur limite de consigne de courant direct déterminée et telle que les courants de phase soient maximaux,
- détermination d'une valeur limite de consigne de courant inverse en fonction de la valeur maximale de courant inverse et d'un courant équilibré inverse.

Grâce à l'invention, une nouvelle condition de limitation du courant est définie pour un convertisseur triphasé de tension fonctionnant en mode déséquilibré, permettant une exploitation maximale de la capacité en courant du convertisseur.

Selon l'invention, le lieu limite du courant dans des conditions de déséquilibre n'est pas le cercle limite défini par la capacité en courant du convertisseur.

Le courant est limité phase par phase, de manière à utiliser pleinement les possibilités en courant du convertisseur.

Il convient de déterminer tout d'abord la valeur limite de consigne de courant direct.

Selon une caractéristique préférée, la valeur limite de consigne de courant direct est déterminée comme étant égale à la capacité en courant du convertisseur si le courant équilibré direct a une valeur supérieure à la capacité en courant du convertisseur, et au courant équilibré direct sinon.

Une fois la valeur limite de consigne de courant direct déterminée, on travaille ensuite sur le courant inverse.

Selon une autre caractéristique préférée, la valeur maximale de courant inverse est déterminée comme étant la valeur minimale de valeurs de courant maximales respectivement déterminées pour chacune des phases en fonction de la valeur limite de consigne de courant direct.

Selon une autre caractéristique préférée, la valeur limite de consigne de courant inverse est déterminée comme étant égale à la valeur maximale de courant inverse si le courant équilibré inverse a une valeur supérieure à la valeur maximale de courant inverse, et au courant équilibré inverse sinon.

Selon une autre caractéristique préféré, le procédé de commande selon l'invention comporte en outre l'étape de détermination de valeurs de courants de phase de consigne du convertisseur en fonction de la valeur limite de consigne de courant direct et de la valeur limite de consigne de courant inverse.

L'invention concerne aussi un dispositif de commande en courant d'un convertisseur de tension triphasé fonctionnant en mode déséquilibré en courant, **caractérisé en ce qu'il** comporte :

- des moyens de détermination d'une valeur limite de consigne de courant direct en fonction d'une capacité en courant du convertisseur et d'un courant équilibré direct,
- des moyens de détermination d'une valeur maximale de courant inverse en fonction de la valeur limite de consigne de courant direct déterminée et telle que les courants de phase soient maximaux,
- des moyens de détermination d'une valeur limite de consigne de courant inverse en fonction de la valeur maximale de courant inverse et d'un courant équilibré inverse.

L'invention concerne encore un convertisseur triphasé de tension, **caractérisé en ce qu'il** comporte un dispositif de commande tel que précédemment présenté.

Le dispositif de commande et le convertisseur présentent des avantages analogues à ceux précédemment exposés.

Dans un mode particulier de réalisation, les étapes du procédé selon l'invention sont mises en oeuvre par des instructions de programme d'ordinateur.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en oeuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

## BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles .

- La figure 1 représente un dispositif de commande en courant d'un convertisseur de tension triphasé fonctionnant en mode déséquilibré en courant, selon l'invention,
- La figure 2 représente un mode de réalisation du dispositif selon l'invention, et
- La figure 3 représente un mode de réalisation de procédé de commande en courant d'un convertisseur de tension triphasé fonctionnant en mode déséquilibré en courant, selon l'invention.

## EXPOSÉ DÉTAILLÉ DE MODES DE RÉALISATION PARTICULIERS

On rappelle tout d'abord qu'il y a équivalence entre des grandeurs respectivement relatives aux phases d'un système triphasé et un vecteur d'espace qui est un nombre complexe.

Le vecteur d'espace contient toute l'information du système triphasé original.

Lorsque le système triphasé est équilibré, le vecteur d'espace parcourt un cercle dans le plan complexe. Une perturbation, telle que notamment un déséquilibre, provoque une déformation du vecteur d'espace, et par conséquent du cercle, visible dans le plan complexe.

Dans la suite, on s'intéresse plus particulièrement aux courants de phase d'un système triphasé déséquilibré et par conséquent au vecteur d'espace courant. Le système triphasé déséquilibré est composé de deux systèmes triphasés équilibrés dont l'un est direct et l'autre est inverse.

On considère les courants de phase de référence, ou de consigne, I1*, I2* et I3* d'un convertisseur triphasé de tension. En vertu de ce qui précède, ces courants de phase de référence peuvent être exprimés en fonction d'un courant équilibré direct Id* et d'un courant équilibré inverse Ii*, selon les relations suivante :

I1*(t) = Id*.cos(w.t) + Ii*.cos(w.t - phi)
I2*(t) = Id*.cos(w.t - 2.n/3) + Ii*.cos(w.t - phi+2.n/3)
I3*(t) = Id*.cos(w.t - 4.n/3) + Ii*.cos(w.t - phi + 4.$\pi$/3)

Dans lesquelles phi est le déphasage du courant inverse par rapport au courant direct.

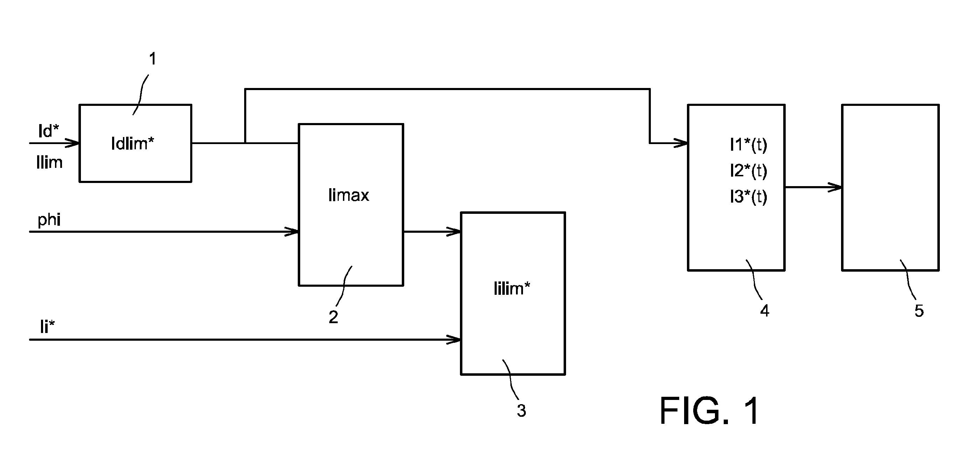

Selon un mode de réalisation représenté à la **figure 1,** un dispositif de commande en courant d'un convertisseur de tension triphasé fonctionnant en mode déséquilibré en courant comporte un module 1 de détermination d'une valeur limite de consigne de courant direct Idlim*. Le module 1 comporte une interface d'entrée apte à recevoir la valeur du courant équilibré direct Id*.

Le module 1 utilise la valeur du courant équilibré direct Id* de la manière suivante :

Si la valeur du courant équilibré direct Id* est supérieure à la valeur de la capacité en courant du convertisseur Ilim, alors la valeur limite de consigne de courant direct Idlim* est égale à la valeur de la capacité en courant du convertisseur Ilim.

Si la valeur du courant équilibré direct Id* est inférieure à la valeur de la capacité en courant du convertisseur Ilim, alors la valeur limite de consigne de courant direct Idlim* est égale à la valeur du courant équilibré direct Id*.

En d'autres termes, la valeur limite de consigne de courant direct Idlim* est égale à la plus petite des valeurs de la capacité en courant du convertisseur Ilim et du courant équilibré direct Id*.

Le module 1 comporte une interface de sortie qui est tout d'abord reliée à une interface d'entrée d'un module 2 de détermination d'une valeur maximale de courant inverse Iimax. Le module 2 comporte une seconde interface d'entrée qui est apte à recevoir le déphasage phi entre le courant direct et le courant inverse.

Le module 1 transmet au module 2 la valeur limite de consigne de courant direct Idlim* qu'il a déterminée.

Le module 2 utilise la valeur limite de consigne de courant direct Idlim* et la valeur du déphasage phi de la manière suivante :

Le module 2 calcule tout d'abord une valeur de courant inverse maximal I1max1, Iimax2 et Iimax3 pour chaque phase, selon les formules suivantes, exprimées en unité réduite, dite « per unit » :

$$Ii\max 1 = -Id\lim^* .\cos(phi) + \sqrt{1 - (Id\lim^* .\sin(phi))^2}$$

$$Ii\max 2 = -Id\lim^* .\cos(phi + 4.\Pi/3) + \sqrt{1 - (Id\lim^* .\sin(phi + 4.\Pi/3))^2}$$

$$Ii\max 3 = -Id\lim^* .\cos(phi + 2.\Pi/3) + \sqrt{1 - (Id\lim^* .\sin(phi + 2.\Pi/3))^2}$$

Le module 2 détermine ensuite la valeur minimale parmi les trois valeurs calculées Iimax1, Iimax2 et Iimax3. Cette valeur minimale est la valeur maximale de courant inverse Iimax.

Le module 2 comporte une interface de sortie qui est reliée à une interface d'entrée d'un module 3 de détermination d'une valeur limite de consigne de courant inverse Iilim* en fonction de la valeur maximale de courant inverse Iimax et du courant équilibré inverse Ii*. Le module 2 fournit la valeur maximale de courant inverse Iimax au module 3.

Le module 3 comporte une seconde interface d'entrée qui est apte à recevoir la valeur du courant équilibré inverse Ii*.

Le module 3 utilise la valeur maximale de courant inverse Iimax et la valeur du courant équilibré inverse Ii* de la manière suivante :

Si la valeur du courant équilibré inverse Ii* est supérieure à la valeur maximale de courant inverse Iimax, alors la valeur limite de consigne de courant inverse Iilim* est égale à la valeur maximale de courant inverse Iimax.

Si la valeur du courant équilibré inverse Ii* est inférieure à la valeur maximale de courant inverse Iimax, alors la valeur limite de consigne de courant inverse Iilim* est égale à la valeur du courant équilibré inverse Ii*.

En d'autres termes, la valeur limite de consigne de courant inverse Iilim* est égale à la plus petite des valeurs parmi la valeur maximale de courant inverse Iimax et la valeur du courant équilibré inverse Ii*.

Le module 3 comporte une interface de sortie qui est reliée à une interface d'entrée d'un module 4 de détermination de valeurs de courants de phase de consigne du convertisseur en fonction de la valeur limite de consigne de courant direct Idlim* et de la valeur limite de consigne de courant inverse Iilim*. Le module 3 délivre la valeur limite de consigne de courant inverse Iilim* au module 4.

Le module 1 comporte une interface de sortie qui est reliée à une interface d'entrée du module 4. Le module 1 délivre la valeur limite de consigne de courant direct Idlim* au module 4.

Le module 4 utilise les valeurs qu'il reçoit en effectuant les calculs suivants pour déterminer les valeurs des courants de phase de consigne I1*(t), I2* (t) et I3*(t) :

$$I1^*(t) = Idlim^*.cos(w.t) + Iilim^*.cos(w.t - phi)$$

$$I2^*(t) = Idlim^*.cos(w.t - 2.\pi/3) + Iilim^*.cos(w.t - phi+2.\pi/3)$$

$$I3^*(t) = Idlim^*.cos(w.t - 4.\pi/3) + Iilim^*.cos(w.t - phi + 4.\pi/3)$$

Le module 4 comporte une interface de sortie qui est reliée à une interface d'entrée d'un convertisseur de tension 5. Le module 4 délivre les valeurs des courants de phase de consigne I1*(t), I2*(t) et I3*(t) au convertisseur 5. Ce dernier est classique et ne sera pas détaillé ici.

Le dispositif de commande, comportant essentiellement les modules 1, 2, 3 et 4 peut être intégré au convertisseur 5 ou au contraire être un dispositif extérieur associé au convertisseur 5.

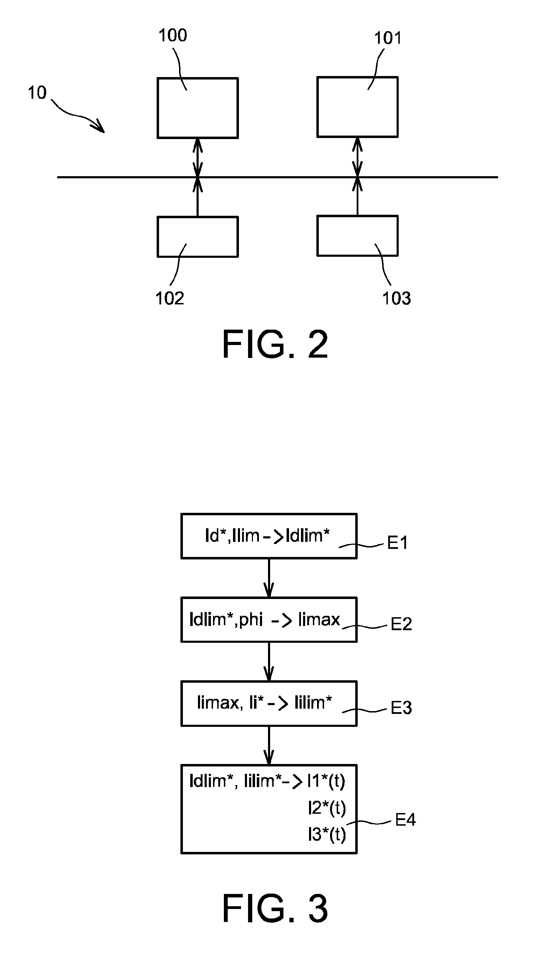

La **figure 2** représente un mode de réalisation particulier du dispositif selon l'invention.

Le dispositif 10 a la structure générale d'un ordinateur. Il comporte notamment un processeur 100 exécutant un programme d'ordinateur mettant en oeuvre le procédé selon l'invention, une mémoire 101, une interface d'entrée 102 et une interface de sortie 103 pour appliquer les valeurs déterminées comme valeurs de consigne du convertisseur.

Ces différents éléments sont classiquement reliés par un bus.

L'interface d'entrée 102 est destinée à recevoir les valeurs de courant équilibré direct Id*, de courant équilibré inverse Ii* et de déphasage phi du courant inverse par rapport au courant direct.

Le processeur 100 exécute les traitements précédemment exposés en référence à la figure 1. Ces traitements sont réalisés sous la forme d'instructions de code du programme d'ordinateur qui sont mémorisées par la mémoire 101 avant d'être exécutées par le processeur 100.

La mémoire 101 peut en outre mémoriser les résultats des traitements effectués.

L'interface de sortie 103 est reliée au convertisseur pour lui appliquer les valeurs déterminées comme valeurs de consigne.

En référence à la **figure 3,** le procédé de commande en courant d'un convertisseur de tension triphasé fonctionnant en mode déséquilibré en courant selon l'invention, mis en oeuvre par le dispositif précédemment décrit, comporte les étapes E1 à E4.

L'étape E1 est la détermination de la valeur limite de consigne de courant direct Idlim* en fonction de la valeur du courant équilibré direct Id* et de la valeur de la capacité en courant du convertisseur Ilim.

La valeur limite de consigne de courant direct Idlim* est égale à la plus petite des valeurs de la capacité en courant du convertisseur Ilim et du courant équilibré direct Id*.

L'étape suivante E2 est la détermination de la valeur maximale de courant inverse Iimax en fonction de la valeur limite de consigne de courant direct Idlim* et du déphasage phi.

Cette étape comporte le calcul de la valeur de courant inverse maximal I1max1, Iimax2 et Iimax3 pour chaque phase selon les formules suivantes :

$$Ii\max 1 = -Id\lim^* .\cos(phi) + \sqrt{1 - (Id\lim^* .\sin(phi))^2}$$

$$Ii\max 2 = -Id\lim^* .\cos(phi + 4.\Pi/3) + \sqrt{1 - (Id\lim^* .\sin(phi + 4.\Pi/3))^2}$$

$$Ii\max 3 = -Id\lim^* .\cos(phi + 2.\Pi/3) + \sqrt{1 - (Id\lim^* .\sin(phi + 2.\Pi/3))^2}$$

Cette étape comporte ensuite la détermination de la valeur minimale parmi les trois valeurs calculées Iimax1, Iimax2 et Iimax3. Cette valeur minimale est la valeur maximale de courant inverse Iimax.

L'étape suivante E3 est la détermination de la valeur limite de consigne de courant inverse Iilim* en fonction de la valeur maximale de courant inverse Iimax et de la valeur du courant équilibré inverse Ii*.

La valeur limite de consigne de courant inverse Iilim* est égale à la plus petite des valeurs parmi la valeur maximale de courant inverse Iimax et la valeur du courant équilibré inverse Ii*.

L'étape suivante E4 est la détermination des valeurs I1*(t), I2*(t) et I3*(t) de courants de phase de consigne du convertisseur en fonction de la valeur limite de consigne de courant direct Idlim* et de la valeur limite de consigne de courant inverse Iilim*.

Ces valeurs sont déterminées selon les formules suivantes :

```
I1*(t) = Idlim*.cos(w.t) + Iilim*.cos(w.t -
phi)
```

```
I2*(t)  =  Idlim*.cos(w.t  -  2.п/3)  +
Iilim*.cos(w.t - phi+2.п/3)
```

```
I3*(t)  =  Idlim*.cos(w.t  -  4.п/3)  +
Iilim*.cos(w.t - phi + 4.п/3).
```

Ces valeurs de courant de consigne sont ensuite appliquées au convertisseur.

**Revendications**

1. Procédé de commande en courant d'un convertisseur de tension triphasé fonctionnant en mode déséquilibré en courant, **caractérisé en ce qu'il** comporte les étapes de :

   - détermination (E1) d'une valeur limite de consigne de courant direct (Idlim*) en fonction d'une capacité en courant du convertisseur (Ilim) et d'un courant équilibré direct (Id*),
   - détermination (E2) d'une valeur maximale de courant inverse (Iimax) en fonction de la valeur limite de consigne de courant direct (Idlim*) déterminée et telle que les courants de phase soient maximaux,
   - détermination (E3) d'une valeur limite de consigne de courant inverse (Iilim*) en fonction de la valeur maximale de courant inverse (Iimax) et d'un courant équilibré inverse (Ii*).

2. Procédé de commande selon la revendication 1, **caractérisé en ce que** la valeur limite de consigne de courant direct (Idlim*) est déterminée comme étant égale à la capacité en courant du convertisseur (Ilim) si le courant équilibré direct (Id*) a une valeur supérieure à la capacité en courant du convertisseur (Ilim), et au courant équilibré direct (Id*) sinon.

3. Procédé de commande selon la revendication 1 ou 2, **caractérisé en ce que** la valeur maximale de courant inverse (Iimax) est déterminée comme étant la valeur minimale de valeurs de courant maximales respectivement déterminées pour chacune des phases en fonction de la valeur limite de consigne de courant direct (Idlim*).

4. Procédé de commande selon l'une quelconque des revendications 1 à 3, **caractérisé en ce que** la valeur limite de consigne de courant inverse (Iilim*) est déterminée comme étant égale à la valeur maximale de courant inverse (Iimax) si le courant équilibré inverse (Ii*) a une valeur supérieure à la valeur maximale de courant inverse (Iimax), et au courant équilibré inverse (Ii*) sinon.

5. Procédé de commande selon l'une quelconque des revendications 1 à 4, **caractérisé en ce qu'il** comporte en outre l'étape (E4) de détermination de valeurs de courants de phase de consigne du convertisseur en fonction de la valeur limite de consigne de courant direct (Idlim*) et de la valeur limite de consigne de courant inverse (Iilim*).

6. Dispositif de commande en courant d'un convertisseur de tension triphasé fonctionnant en mode déséquilibré en courant, **caractérisé en ce qu'il** comporte :

   - des moyens (1) de détermination d'une valeur limite de consigne de courant direct (Idlim*) en fonction d'une capacité en courant du convertisseur (Ilim) et d'un courant équilibré direct (Id*),
   - des moyens (2) de détermination d'une valeur maximale de courant inverse (Iimax) en fonction de la valeur limite de consigne de courant direct (Idlim*) déterminée et telle que les courants de phase soient maximaux,
   - des moyens (3) de détermination d'une valeur limite de consigne de courant inverse (Iilim*) en fonction de la valeur maximale de courant inverse (Iimax) et d'un courant équilibré inverse (Ii*).

7. Convertisseur triphasé de tension, **caractérisé en ce qu'il** comporte un dispositif de commande selon la revendication 6.

8. Programme d'ordinateur comportant des instructions pour l'exécution des étapes du procédé selon l'une quelconque des revendications 1 à 4 lorsque ledit programme est exécuté par un ordinateur.

9. Support d'enregistrement lisible par un ordinateur sur lequel est enregistré un programme d'ordinateur comprenant des instructions pour l'exécution des étapes du procédé selon l'une quelconque des revendications 1 à 4.

FIG. 1

100

101

10

102

103

## FIG. 2

Id*,Ilim ->Idlim*     E1

Idlim*,phi -> Iimax     E2

Iimax, Ii* -> Iilim*     E3

Idlim*, Iilim*-> I1*(t)
I2*(t)     E4
I3*(t)

## FIG. 3

Europäisches
Patentamt

European
Patent Office

Office européen
des brevets

**RAPPORT DE RECHERCHE EUROPEENNE**

Numéro de la demande

EP 13 15 5388

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2012/062327 A2 (VESTAS WIND SYS AS [DK]; GUPTA AMIT KUMAR [SG]; NIELSEN JOHN GODSK [DK] 18 mai 2012 (2012-05-18) ----- | 1-9 | INV. H02J3/26 H02M7/5387 |
| A | US 2005/063205 A1 (STANCU CONSTANTIN C [US] ET AL) 24 mars 2005 (2005-03-24) * le document en entier * ----- | 1-9 | |
| A | US 2009/244937 A1 (LIU YANZHEN [US]) 1 octobre 2009 (2009-10-01) * le document en entier * ----- | 1-9 | |

| DOMAINES TECHNIQUES RECHERCHES (IPC) |
|---|
| H02J H02M |

Le présent rapport a été établi pour toutes les revendications

| Lieu de la recherche | Date d'achèvement de la recherche | Examinateur |
|---|---|---|
| Munich | 13 novembre 2013 | Jansen, Helma |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 13 15 5388

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2013

| Document brevet cité au rapport de recherche | Date de publication | Membre(s) de la famille de brevet(s) | Date de publication |
|---|---|---|---|
| WO 2012062327 A2 | 18-05-2012 | EP 2638282 A2 | 18-09-2013 |
| | | EP 2638283 A2 | 18-09-2013 |
| | | US 2013264824 A1 | 10-10-2013 |
| | | WO 2012062323 A2 | 18-05-2012 |
| | | WO 2012062327 A2 | 18-05-2012 |
| US 2005063205 A1 | 24-03-2005 | AUCUN | |
| US 2009244937 A1 | 01-10-2009 | AU 2009228245 A1 | 01-10-2009 |
| | | CA 2719584 A1 | 01-10-2009 |
| | | CN 101816121 A | 25-08-2010 |
| | | EP 2269294 A2 | 05-01-2011 |
| | | KR 20100137549 A | 30-12-2010 |
| | | US 2009244937 A1 | 01-10-2009 |
| | | WO 2009120832 A2 | 01-10-2009 |

EPO FORM P0460

Pour tout renseignement concernant cette annexe : voir Journal Officiel de l'Office européen des brevets, No.12/82